(19) Europäisches Patentamt
European Patent Office
Office européen des brevets

(11) **EP 0 793 543 B1**

(12) **EUROPEAN PATENT SPECIFICATION**

(45) Date of publication and mention
of the grant of the patent:
**10.10.2007 Bulletin 2007/41**

(51) Int Cl.:
**B05D 7/22** (2006.01)     **B05D 1/02** (2006.01)
**B05B 13/06** (2006.01)

(21) Application number: **95939089.9**

(22) Date of filing: **06.11.1995**

(86) International application number:
**PCT/US1995/014465**

(87) International publication number:
**WO 1996/014166 (17.05.1996 Gazette 1996/22)**

(54) **A METHOD AND DEVICE FOR PRODUCING AND DELIVERING AN AEROSOL FOR REMOTE SEALING AND COATING**

VERFAHREN UND VORRICHTUNG ZUR HERSTELLUNG UND TRANSPORTIEREN EINES AEROSOLS ZUM BESCHICHTEN UND ABDICHTEN AUF ABSTAND

PROCEDE ET DISPOSITIF DE PRODUCTION ET D'APPORT D'UN AEROSOL DESTINES A ASSURER UNE ETANCHEITE ET A MENAGER UN REVETEMENT A DISTANCE

(84) Designated Contracting States:
**BE DE ES FR GB IE IT NL SE**

(30) Priority: **04.11.1994 US 333980**

(43) Date of publication of application:
**10.09.1997 Bulletin 1997/37**

(73) Proprietor: **The Regents of the University of California**
**Oakland,**
**California 94612-3550 (US)**

(72) Inventors:
• **MODERA, Mark, P.**
**Piedmont, CA 94601 (US)**

• **CARRIE, François, Rémy**
**F-27180 Cauge (FR)**

(74) Representative: **Käck, Jürgen et al**
**Patentanwälte**
**Kahler Käck Mollekopf**
**Vorderer Anger 239**
**86899 Landsberg (DE)**

(56) References cited:
GB-A- 2 195 416     US-A- 4 331 722
US-A- 4 554 178     US-A- 4 768 561
US-A- 4 994 307     US-A- 5 622 209

**Description**

FIELD OF THE INVENTION

The present invention relates to a method and device for producing and delivering an aerosol for remote sealing and coating. More specifically the invention relates to sealing leaks from the inside of enclosures or applying an even coating to the inside surface of those enclosures remotely by means of injecting an aerosol into the enclosure to be sealed.

BACKGROUND OF THE INVENTION

There is a substantial need for methods of remote sealing and coating. Research has shown that the energy savings potential of sealing duct leaks is on the order of 20% of the furnace or air conditioner energy use (Modera, M.P. (1993 Energy and Buildings, 20:65-75). During the past five years, research has quantified the impacts of residential duct system leakage on HVAC energy consumption and peak electricity demand. A typical California house with ducts located in the attic or crawlspace wastes approximately 20% of heating and cooling energy through leaks and draws approximately 0.5 kW more electricity during peak cooling periods. Besides, given that 25% to 75% of the leaks are not accessible, conventional technologies such as using duct tape or mastic are often not satisfactory.
Encapsulants for duct systems have been previously disclosed and some of those have been applied by introducing a fog into the duct system.
Shinno teaches sealing and coating a pipe through the application of a mist to the interior surface of the pipe [U.S. Patent No. 4,327,132 Method for Lining of Inner Surface of a Pipe (April 27, 1982)]. This patent discusses the use of a multiple component epoxy based mist which is applied with a rapid air stream and then dried in place with the same rapid air stream. It also discusses the withdrawal and revival of residual paint exhausted from the pipe outlet. The Shinno patent calls for multiple gas flows, one to atomize the liquid to be applied and another to blow the mist down the pipe. Shinno also calls for mixture velocities of between 30 meters/second and 100 meters/second.
Koga teaches a method and apparatus for generating a plastic mist for deposition upon the interior surface of a pipe [U.S. Patent No. 4,454,173 Method for Lining Pipes in a Pipeline (June 12, 1984) and U.S. Patent No. 4,454,174 Method for Lining Pipes of a Pipeline (June 12, 1984)]. These patents confine themselves to the delivery of a plastic mist to the interior pipe surface. The Koga patents describe the use of a compressor and a vacuum generator to carry the mist through the pipeline. Additionally, these patents teach the use of low air pressure at one stage and high air pressure at another. In the Koga patent a heater is used to maintain the plastic in a liquid form.
Hyodo et al. teaches a method for sealing pipes which comprises feeding an aerosol type sealant into a pipe in the form of a foam [U.S. Patent No. 4,768,561 Process for Sealing Pipes (September 6, 1988)]. The sealant disclosed is one containing an aqueous resin selected from the group consisting of emulsions and latexes as a main component and being added with a propellant such as Freon 12/Freon 114.
In GB 2 195 416 A an insitu injection method is presented for sealing a gas pipeline with gas flowing in the pipeline. A fog is generated by directly spraying a liquid sealant from a spray tip arranged within a gas pipeline into the gas flow within the gas pipeline.
In US 4,994,307 A a permanent fogging system for gas mains is used in which the gas mains are accessed from inside to cure remote leaks. So the continuous fogging carries the resin sealant to leaks in dependency of the current flowing and leak conditions.
US 4,768,561 A discloses a process for sealing pipes in which a foam is introduced into the pipe by spraying in a fluid from a spraying can. Foam is sprayed into the pipe until a predetermined pressure is attained and maintained.
It is an object of the present invention to provide a method and device which is capable of sealing a plurality of leaks from within an enclosure.
The invention is defined in claims 1, 15 and 20, respectively.

SUMMARY OF THE INVENTION

The present invention is a method and device for remotely sealing and coating an enclosure from within. It allows for precise control of where the encapsulant material is deposited and is capable of effectively sealing leaks remotely from within an enclosure even where a complex network of bends, tees, and wyes is involved.
A method according to the invention recites the use of aerosol sealants, the versatility of this technique is that it can be used effectively in enclosure with bends and bifurcations without significantly affecting sealing performance.
The method involves blowing an aerosol through an enclosure or duct system to seal the leaks from the inside, the principle being that the aerosol particles deposit in the cracks of the ductwork as they try to escape because of the pressure differential from blowing. However, merely introducing an aerosol with randomly sized particles does not result in a seal. A technique according to the invention utilizes a better understanding of aerosol transport in an ADS (air distribution system) as well as particle deposition in the leaks to provide quantifiable sealing performance.

An aerosol-based technique is used to significantly reduce the leakiness of air distribution systems (ADS). An aerosol made out of a liquid suspension of a vinyl polymer can plug 16 cm$^2$ of Effective Leakage Area in a branch of a residential duct system in less than 30 minutes. In a small scale duct system the Effective Leakage Area of a typical duct can be reduced by about 80% in 20 minutes (see Table 1, below).

Using an aerosol to seal leaks from within an enclosure or to apply an even coating along the interior surface of an enclosure requires careful preparation of the aerosol and control of the flow through the enclosure. In the case of leak sealing, the pressure within the enclosure must also be controlled in order for the aerosol to deposit at the leaks.

The present invention represents a dramatic breakthrough in the technology because it is capable of both remotely sealing and coating an enclosure from within. Not only useful for sealing and coating ducts and other enclosures, this technology is also applicable to filling voids in buildings and other cavities for increased structural integrity, sound proofing, and insulation. The sealing and coating method and device described in this application offer significant advantages over the conventional technology.

It is an advantage of the present invention to provide a method and device which can seal leaks without having to be directed towards specific openings.

It is a further advantage of the present invention to provide a device which can be easily transported.

It is a further advantage of the present invention to provide a device which is safe and easy to use.

These and other objects and features of the invention will become fully apparent when the following detailed description of the invention is read in conjunction with the accompanying drawings.

BRIEF DESCRIPTION OF THE DRAWINGS

Figure 1 is a cutaway side view of a device for implementing the method of the present invention.

Figure 2 is a graph of an example of Penetration efficiency plotted versus flowrate for various particle sizes;

Nomenclature

$C_m$    mass concentration of the aerosol [kg/m$^3$]

$D$    duct diameter [m]

$d(\ )$    differential [-]

$d_p$    particle diameter [m]

$$\frac{dU}{dy}$$    velocity gradient of the approaching flow [s$^{-1}$]

$e$    duct wall thickness [m]

$f$    Friction factor [-]

$g$    acceleration of gravity [m/s$^2$]

$h$    leak-width [m]

$i$    index [-]

$L$    duct length [m]

$P$    penetration [-]

$Q$    flow rate [m$^3$/s]

$Re_s$    slot Reynolds number $\dfrac{v_s h}{v}$ [-]

$Re_D$    duct Reynolds number $\dfrac{U D}{v}$ [-]

$Re_p$    particle Reynolds number (based on relative velocity) [-]

$S$    particle-to-air density ratio [-]

$SE$    sealing efficiency [-]

*Stk*    Stokes number $\dfrac{\tau v_s}{y_s} = \dfrac{S\,Re}{18}\left(\dfrac{d_p}{h}\right)^2 \sqrt{\dfrac{\alpha}{2}}$  [-]

*t*     time [s]

$t_i$     i-th characteristic sealing time [s]

$t_{res}$    residence time in the separation zone  $t_{res} \sim \dfrac{y_s}{v_s}$  [s]

*U*     Average velocity in the duct [m/s]

$U_s$     velocity upstream of the slot at $y=y_s$ [m/s]

*u*     velocity along x [m/s]

$\vec{u}$     velocity vector [m/s]

$V_d$     turbulent diffusion velocity [m/s]

$V_e$     Effective mean deposition velocity at the wall [m/s]

$V_g$     Gravitational settling velocity $V_g = g\,\tau$ [m/s]

$V_*$     Dimensionless deposition velocity [-]

v     velocity along y [m/s]

$v_r$     Radial velocity of the particle [m/s]

$v_s$     Bulk velocity through the slot; here  $\sqrt{\dfrac{1}{C_p}\dfrac{2\Delta P}{\rho_f}}$  [m/s]

*w*     thickness of the seal [m]

$w_r$     Relative velocity of the particle

$$w_r = \left\| \vec{u}_p - \vec{u}_f \right\|\ \text{[m/s]}$$

*x*     horizontal coordinate [m]

*y*     vertical coordinate [m]

$y_s$     height of the dividing suction streamline [m]

Greek symbols:

α     dimensionless velocity gradient of the approaching flow  $\dfrac{h}{v_s}\dfrac{dU}{dy}$  [-]

$\Delta P$     pressure differential across the slot [Pa]

γ     Angle [rd]

η     deposition efficiency [-]

ν     kinematic viscosity of the fluid of interest [m$^2$/s]

ρ     density [kg/m$^3$]

τ     particle relaxation time [s]

$\tau_*$     Dimensionless particle relaxation time [-]

Subscripts and superscripts:

*f*     pertaining to the fluid of interest

0      at t = 0, at the beginning of the experiment

*D*      pertaining to duct

*p*      pertaining to particle

*ref*      at the reference pressure differential

*s*      pertaining to slot

*seal*      pertaining to particle build up

-      average value

*      dimensionless quantities

Abbreviations:

ADS     Air Distribution System

ELA     Effective Leakage Area [$m^2$]

DETAILED DESCRIPTION OF THE INVENTION

The present invention is a method and device for the remote sealing and/or coating of a structure from within. Specifically the invention includes a method for preparing, transporting, and remotely depositing an aerosol along the interior surface of an enclosure and/or depositing the aerosol in any leaks or openings in that enclosure so as to seal those leaks or openings. The invention also includes a device capable of performing the method.

The Method

There are four steps to the general method of the present invention. First, an aerosol is prepared (for example from a liquid suspended solid). Second, a carrier (fluid) flow is generated. Third, the aerosol is introduced into the carrier flow. Fourth, the aerosol laden carrier flow is used to pressurize the enclosure to be sealed.

The most critical aspect of preparing the aerosol for the leak sealing aspect of the subject invention is that it must be appropriately sized and substantially solidified prior to reaching the leaks to be sealed. The aerosol must be sized small enough to travel to the leaks prior to leaving the carrier flow through gravitational settling and be large enough to leave the air stream and deposit along the leak boundaries once the leak is reached. When used for sealing, the particles must be sticky and they must substantially hold their shape so that they can build up on one another when they impinge upon the interior surface of the enclosure.

In one embodiment of the present invention, this preparation is accomplished by either 1) drying the air prior to the injection of a liquid-suspended solid aerosol or 2) heating the incoming airflow prior to aerosol injection. When using a liquid base for the sealant aerosol, two means for the controlling the size of the aerosol particles are the type of injection nozzle used and the degree of dilution of the liquid suspension. Alternatively, it is possible that a solid phase aerosol could be used directly.

The most important variables affecting the transport and deposition of the aerosol are, the duct (i.e., enclosure) flow rate, the size of the particle, and the duct pressure. These variables affect the rate and efficiency with which sealing (all three variables) and coating (flowrate and size) occur. They also determine how far down the duct (or pipe) a particle will travel prior to gravitational settling.

These variables can be calculated once a particular sealing efficiency has been chosen. Sealing efficiency is the product of penetration efficiency($P$) and deposition efficiency ($\eta$).

$$[\text{Sealing efficiency}] = (P)\,(\eta)$$

$$P = \exp\left(-\frac{4V_e L}{v\mathrm{Re_D}}\right) = \exp\left(-\frac{4V_e L}{UD}\right)$$

$$\eta \sim \frac{\tau \mathrm{v}_s^2}{y_s}\frac{e}{\mathrm{v}_s h} = Stk\frac{e}{h}$$

Stokes number is defined by:

$$Stk = \frac{S\,\mathrm{Re}}{18}\left(\frac{d_p}{h}\right)^2\sqrt{\frac{\alpha}{2}} = \frac{\tau c v}{y}$$

Calculations were performed using the models for the velocity caused by turbulent diffusion ($V_d$) experimentally-derived correlations (see Anand, N.K. and Mc Farland, A.R. American Industrial Hygiene Association, 50: 307-312) were used to determine the turbulent diffusion velocity ($V_d$):

$$V_d = V_* U\sqrt{f/2}$$

$$V_* = 6.9 \times 10^{-4}\,\tau_*^2 \quad \textit{for}\quad \tau_* \leq 15$$

$$V_* = 0.16 / \tau_*^{0.086} \quad \textit{for}\quad \tau_* > 15$$

$$\tau_* = \frac{\tau U}{D} fRe_D$$

where the friction factor $f$ is given by the Blasius equation:

$$f = \frac{0.316}{4\mathrm{Re_D}^{0.25}}$$

The effective mean deposition velocity Ve can be assessed:

$$V_e = \begin{cases} \dfrac{1}{2\pi}\left[(\pi + 2\gamma)\,V_d + 2V_g\cos\gamma\right], \\[1em] \quad if \quad |V_d| < |V_g|, \\[1em] \quad\quad where \;\; \gamma = \arcsin\left(\dfrac{V_d}{V_g}\right); \\[1em] V_d, \\[1em] \quad if \quad |V_d| \geq |V_g| \end{cases}$$

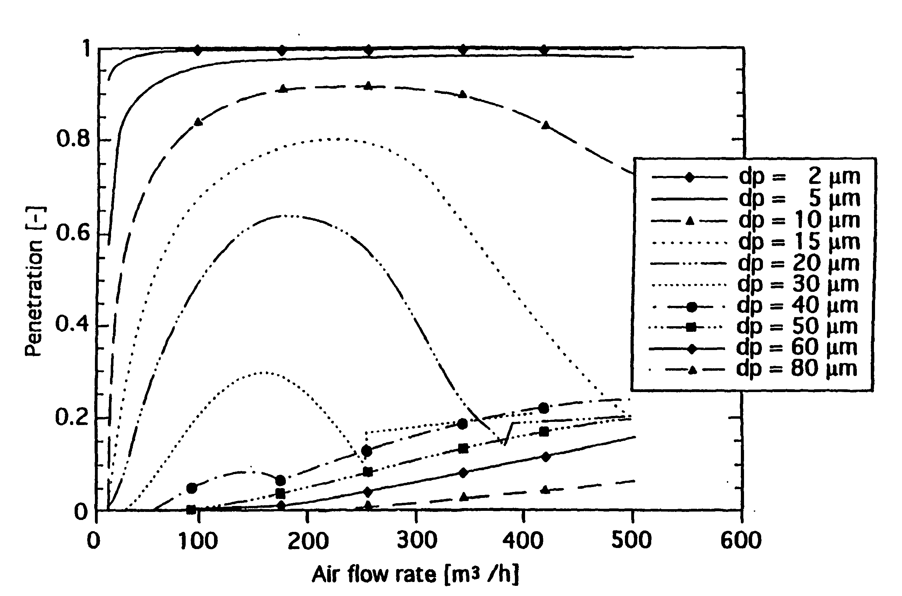

From the point of view of coating, as can be understood from a close examination of Figure 2, the greater the turbulent diffusion velocity ($V_d$) as compared to the gravitational settling velocity ($V_g$), the more even particle deposition is in a cross-section of the duct of interest.

As for the deposition efficiency ($\eta$), in the case of particle deposition in a two-dimensional slot from a transverse stream (which is representative of the deposition phenomenon that occurs in many leaks encountered in air-distribution systems and can be used to approximate sealing of annular joint leaks and circular holes), it may be determined as follows:

$$\eta \sim \frac{\tau v_s^2}{y_s}\frac{e}{v_s h} = \frac{\tau v_s}{y_s}\frac{e}{h} = Stk\frac{e}{h}$$

where the symbols are listed in the Nomenclature and $v_s$ and $y_s$ can be calculated with the following equations:

$$v_s = 0.6\sqrt{\frac{2\,\Delta P}{\rho_f}}$$

$$y_s = D\sqrt{50.63\frac{Re_s}{Re_D^{\frac{7}{4}}}}$$

The theoretical limits of such an analysis are approximated by the following:

$$\mathrm{Re}_p \sim Stk \; \frac{v_s \, d_p}{v} \; << \; 1$$

$$\mathrm{Stk} \sim \frac{\tau}{t_{res}} \; << \; 1$$

$$\frac{\tau \, v_s}{e} \; >> \; 1$$

There is more than one set of flow rates, particle sizes, and duct pressures that will satisfy these equations. For the sealing aspect of the present invention the solid aerosol particle can measure between 1 and 100 microns. In its preferred range the particle size should measure between 2 and 40 microns in diameter with a most preferred range of between 3 and 15 microns in diameter. Flow rates can range from 20 - 20,000 cubic meters per hour. In residential duct work the preferred range for flow rates is between 100 and 5000 cubic meters per hour with a most preferred range of between 200 and 600 cubic meters per hour. In commercial duct work the preferred range for flow rate is between 500 and 5000 cubic meters per hour. There is an upper limit on duct pressure established by the structural integrity of the enclosure to be sealed.

With regards to sealing leaks, particle deposition is achieved by "building up a bridge," between the boundaries formed by a leak in the enclosure. In one embodiment, the particulate sealant material is suspended in a liquid base. A solid phase aerosol is formed by removing the liquid during the aerosol injection. One example of a suitable material is to suspend vinyl plastics in water for use as an aerosol. Specifically, an aerosol is generated from a liquid suspension of an acetate-acrylate vinyl polymer and then dried in order to obtain solid sticky particles. Regardless of the material chosen, it is critical that the particles retain their shape on impact with the leak boundaries. If the particles are too deformable, they will tend to spread over the leak boundaries preventing any particle build up spanning the leaks.

In the actual practice of the above described method the duct flow rate and the pressure within the enclosure must be maintained to minimize the loss of sealant material. In practice the pressure and flow rate must be maintained above a minimum value.

The preparation of the enclosure to be sealed typically includes closing intentional openings in the enclosure. For example, the vents in a heating system would be closed. Another possible step in the preparation of the enclosure would be the introduction of bag filters to keep up the velocity within the system. In the real world it would also be necessary to isolate any objects within the enclosure that might be sensitive to coating.

In the sealing application, closing intentional openings and using a gas as the carrier makes it possible for the invention to provide immediate feedback on the air-tightness of the enclosure being sealed. This is accomplished by monitoring the carrier flow and the enclosure pressure during the sealing process.

General Coating Concept

By means of the knowledge disclosed in this application, aerosol injection can be optimized to coat the inside of enclosures rather than buildup preferentially at the leaks in those enclosures. This is accomplished by operating in a regime of aerosol transport that is turbulent-diffusion dominated, and does not require the use of "limited-slip" particles (i.e., particles that will build-up). This can be understood by examining the equations for penetration efficiency, P, and deposition velocity, $V_e$. The deposition velocity is made up of two components, the gravitational settling velocity, $V_g$, and the turbulent diffusion velocity, $V_d$. As the air flowrate is increased, the velocity and Reynolds number of the flow through the enclosure is increased, which increases the turbulent diffusion velocity, $V_d$. By increasing the turbulent diffusion velocity, wall deposition becomes dominated by turbulent diffusion, and therefore becomes uniform. By contrast, at low flowrates (i.e., velocities and Reynolds numbers) wall deposition occurs principally by means of gravitational settling, and therefore is concentrated at the bottom of the enclosure.

In addition, because the aerosol does not need to span any gaps for the coating application, the constraint that the particles be "limited-slip" (i.e., that they do not flow appreciably after contact) is relaxed. In fact, some particle flow is beneficial in this application, as it will result in a more uniform coating.

Figure 2 illustrates the regimes of operation for the particular application of an air duct. At low air flow rates the removal of particles from the airstream occurs principally by gravitational settling, which results in deposition on the bottom of the duct, and therefore a low penetration. As the air flow is increased, the wall deposition is decreased due to the fact that the particles are moving more quickly through the duct, and therefore travel further before falling to the bottom, corresponding to a high penetration. To preferentially deposit particles at the leaks, particle sizes and flowrates that maximize enclosure penetration efficiency while maintaining a reasonable deposition efficiency are chosen. As the air flow rate is increased further, the removal at walls begins to increase due to the increase in turbulent diffusion to the walls at higher Reynolds numbers, resulting once again in a low penetration. It is this third regime that results in relatively uniform coating on the interior walls of the duct.

A plot of the Effective Leakage Area versus time documents a large reduction in the leakage area. The time history of the Leakage reduction provides documentation of the sealing process. Documentation of leakage area reduction can be presented to third party auditors to quantify the effectiveness of sealing and subsequent energy saving as a result of using the particles to seal remote leaks. The ELA curve will be different for different duct systems, even duct systems which are ostensibly constructed identically. Identical curves have a very low probability of occurring. A Device

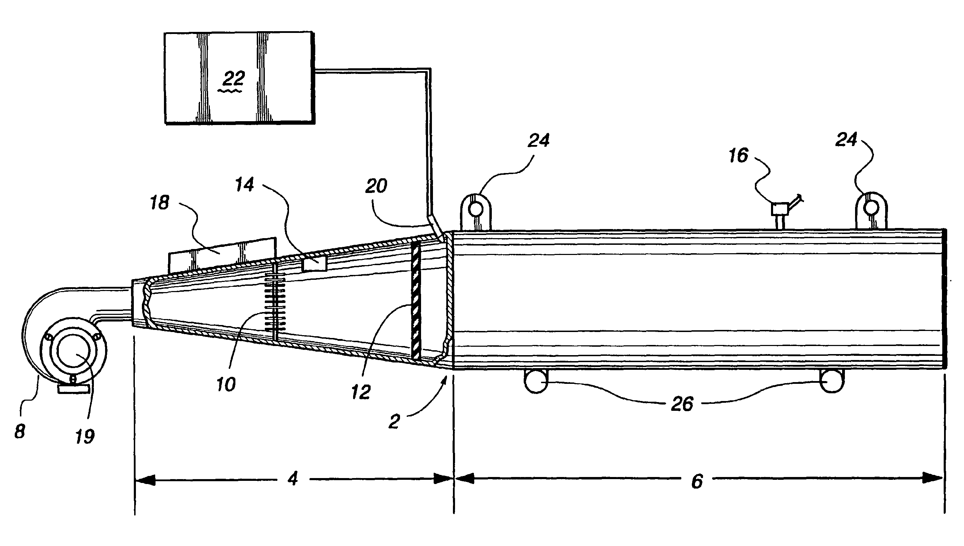

One aspect of the present invention is a device for carrying out the method described above. Figure 1 illustrates one embodiment of the present invention. The device is made up of a primary body 2 being comprised of a hollow structure divided into a preparation end 4 and a delivery end 6. In one embodiment the primary body 2 is cylindrical in shape with the preparation end 4 tapering into a truncated cone.

A fan 8 is connected to the preparation end 4 of the primary body 2 The fan 8 produces an airflow through the hollow portion of the primary body 2 and exits at the delivery end 6 of the primary body 2. The air flow produced is the carrier flow into which the solid phase aerosol will be injected and the used to pressurize the enclosure to be sealed. An airheater 10 placed between the fan 8 and the delivery end 6 of the primary body 2 heats the incoming airflow. In another embodiment the use of a desiccant could be substituted for the air heater 10. A filter 12 is fitted between the airheater 10 and the delivery end 6 of the primary body 2 to reduce any particulate impurities prior to injecting the aerosol and insure that aerosol particles do not come in contact with the heater 10.

A thermostat 14 is located within the primary body 2. A pressure switch 16 is located within the primary body 2. In the present embodiment the switch 16 is located in the delivery end 6 of the primary body 2. A control mechanism 18 connecting the fan 8, pressure switch 16, airheater 10, and thermostat 14 in conjunction with those parts controls the temperature and velocity of the carrier flow.

A flow measurement sensor 19 is connected to the inlet of the fan 8. In one embodiment, the pressure difference across an orifice plate is measured with a pressure transducer. The flow through the unit is proportional to the square root of the pressure differential across the orifice plate.

An injection nozzle 20 is set into the primary body 2 between the filter 12 and the delivery end 6 of the primary body 2. A liquid suspension of aerosol is delivered to the injection nozzle 20 from an aerosol source 22. In one embodiment the aerosol source 22 is comprised of an air compressor, a pressure regulator, and a liquid storage tank. The best results will be obtained where the injection nozzle and aerosol source produce a monodisperse aerosol. If a dry aerosol source is used, the air heater 10 can be eliminated.

A pair of handles 24 are attached to the primary body 2 of the device to aid with transportation and handling of the device. Additionally, a set of feet 26 are attached to the bottom of the primary body 2 to stabilize the unit and aid in positioning the device.

In actual use the delivery end 6 is connected to an opening in the enclosure to be sealed. The fan 8 generates a carrier flow which is pulled through the flow measurement sensor 19, heated by the airheater 10, and then passed through the filter 12 to remove impurities. Aerosol is injected from the aerosol source 22 through the injection nozzle 20 into the preparation end 4 of the device. The aerosol is carried by the carrier flow generated by the fan 8 and out the delivery end 6 of the device. The liquid in the aerosol evaporates off and the carrier flow with the remaining solid phase aerosol is used to pressurize the enclosure to be sealed.

The pressure differential between the interior of the enclosure and the outside atmosphere causes the particles of the solid phase aerosol to find the leaks in the enclosure. When the aerosol impinges on the interior boundaries of the leaks, it sticks where it makes contact. Through this process a "bridge" is built up between the boundaries formed by a leak in the enclosure.

As leaks are sealed the pressure in the enclosure rises. The rise in pressure acts as feed back to the device and the pressure switch 16 in conjunction with the control mechanism 18 turns off the device once pressure reaches a level indicating that the leaks are sealed.

Example 1

Experiments were conducted using a device similar to the embodiment described herein. It has been found that use of the method and device of the present invention can seal 16 cm$^2$ Effective Leakage Area (ELA) in an enclosure in less than 30 minutes. The results in Table 1 provide a proof-of-concept of the of the sealing of an enclosure with aerosols. Table 1 illustrates typical results.

TABLE I - ELA Reduction After Aerosol Injection

| # | Initial Flow Rate [m$_3$/h] | Ending Pressure [Pa] | Liquid Flow Rate [cc/min] | Duration [min] | ELA before Injection [cm$^2$] | Precision in initial ELA measurement (in %) | ELA Reduction (in %) |
|---|---|---|---|---|---|---|---|
| 1 | 40 | 60 | 5.7 | 50 | 16.4 | 3.0 | 34 |
| 2 | 70 | 96 | 10 | 25 | 16.4 | 3.0 | 18 |
| 3 | 60 | 135 | 6 | 20 | 16.4 | 3.0 | 84 |
| 4 | 50 | 210 | 5 | 30 | 16.4 | 3.0 | 95 |
| 5 | 50 | 205 | 5 | 30 | 16.4 | 3.0 | 82 |
| 6 | 40 | 210 | 410 | 30 | 16.4 | 3.04 | 94 |
| 7 | 40 | 209 | 4 | 30 | 16.4 | 3.0 | 94 |
| 8 | 30 | 18 | 3 | 30.4 | 16.4 | 3.0 | 29 |
| 9 | 60 | 105 | 6 | 30 | 16.4 | 3.0 | 94 |
| 10 | 40 | 10 | 4 | 30 | 36.1 | 2.4 | 37 |
| 11 | 50 | 15 | 5 | 30 | 26.3 | 2.7 | 42 |

In the Experiments(#) 1-11 summarized in Table 1, an in-line heater was used to lower the water content of the aerosol particles prior to aerosol injection.

From Table 1, it can be seen that the ELA of the Enclosure can be reduced by more than 90% in 20 to 45 minutes. In addition, the initial air flow rate can be lowered down to 40 cubic meters/hour per branch, and still provides sufficient aerosol penetration and significant ELA reduction (see experiments 6 and 7). According to our experiments, plugging an equivalent of 16 cm$^2$ will occur in about 30 minutes. Larger initial leaks require more time for sealing (see experiments 10 and 11).

Example 2

The graph shown in Figure 2 illustrates Penetration efficiency as a function of flow rate and particle size. This example was carried out using the method of the present invention in a duct having a 15 cm diameter and a length of 10 meters. The ridge in the plots represents the conditions under which the maximum penetration results from a balance of turbulent diffusion velocity $V_d$ to the walls of the duct and gravitational settling velocity $V_g$ for a particular particle size travelling through the duct.

**Claims**

1. A method for sealing leaks in a fluid enclosure comprising the steps of:

> a) pressurizing the enclosure using a fluid flowing at a particular fluid flow rate from a fluid injection location to and through leaks in said fluid enclosure and providing a particular differential pressure across the leaks;
> b) monitoring the fluid flow and the pressure within said fluid enclosure;
> c) injecting into said fluid enclosure an aerosol comprising particles in a size range between 1 and 100 microns in diameter; and
> d) introducing said particles into said fluid flowing to and through said leaks,

wherein said particles substantially retain their shape and adhere to the enclosure wall and to each other at impact at locations adjacent to the leaks to build up a bridge of particles to span between the boundaries of each of said leaks.

2. The method as recited in claim 1, wherein said particles are in a size range between 2 and 40 microns in diameter.

3. The method as recited in claim 2, wherein said particles are in a size range between 3 and 15 microns in diameter.

4. The method as recited in claim 1, wherein the fluid flow rate generated is between 20 and 20,000 cubic meters per hour.

5. The method as recited in claim 4, wherein the fluid flow rate generated is between 100 and 5,000 cubic meters per hour.

6. The method as recited in claim 5, wherein the fluid flow rate generated is between 200 and 600 cubic meters per hour.

7. The method as recited in claim 1, wherein the particles are a solid phase aerosol with step *d)* comprising the steps of:

   e) diluting a sealant suspended in a carrier liquid;
   f) injecting the sealant suspended in the carrier liquid into the fluid flow, and
   g) reducing the degree of saturation of the vapor phase of the carrier liquid in the fluid flow.

8. The method as recited in claim 7, wherein step g) includes the step of:

   h) drying the gas in said fluid flow.

9. The method as recited in claim 7, wherein step g) includes the step of:

   h) heating the gas in said fluid flow.

10. The method as recited in claim 1, wherein step a) to aid in pressurizing the enclosure comprises the steps of:

    e) closing any intentional openings in the enclosure; and
    f) isolating or removing coating-sensitive structures from the interior of the enclosure.

11. The method as recited in claim 10, wherein step a) to further aid in pressurizing the enclosure comprises the additional step of:

    g) using a filter at an intentional opening of said enclosure to reduce internal pressure and increase fluid flow velocities.

12. The method as recited in claim 10, wherein step a) to further aid in pressurizing the enclosure comprises the additional step of:

    g) inducing turbulence in the enclosure to help keep particles suspended in the airflow.

13. The method as recited in claim 7, wherein the solid phase aerosol is suspended in water.

14. The method as recited in claim 7, wherein the gas used to generate said carrier flow is air.

15. A device for remotely sealing and coating an enclosure from within comprising:

    a) a primary body (2) being comprised of a hollow structure divided into a preparation end (4) and a delivery end (6),
    b) a fan (8) connected to the preparation end (4) of the primary body (2),
    c) an airheater (10) disposed between said fan and the delivery end of the primary body,
    d) a filter (12) disposed between said airheater and the delivery end of the primary body,
    e) a thermostat (14) located within the primary body,
    f) a pressure switch (16) located within the primary body,

g) a control mechanism (18) connecting said fan, the pressure sensor, said airheater and the thermostat,
h) an injection nozzle (20) set into the primary body between the filter and the delivery end of the primary body, and
i) an aerosol source (22) connected to said injection nozzle;

wherein the injection nozzle (20) is adapted to inject an aerosol comprising particles in a size range between 1 and 100 microns in diameter.

16. The device as recited in claim 15, wherein a flow measurement apparatus (19) is connected to said fan.

17. The device as recited in claim 16, wherein the pressure switch (16) is a remote unit located within the enclosure to be sealed.

18. The device as recited in claim 16, wherein the injection nozzle (20) is an ultrasonic nozzle.

19. The device as recited in claim 16, wherein the aerosol source (22) comprises an air compressor, a pressure regulator, and a liquid storage tank.

20. A seal of a leak opening in an enclosure comprising:

particles which substantially retain their shape and adhere to an enclosure wall and each other at locations adjacent to a leak opening in the enclosure wall, where the particles as a result of their adherence to each other at locations adjacent to said leak opening form a bridge of particles establishing a seal spanning between the boundaries of said leak;
wherein said leak opening seal is applied by a method according to claim 1; or
wherein said leak opening seal is applied using a device according to claim 15.


**Patentansprüche**

1. Verfahren zum Abdichten von Lecks in einem Fluidgehäuse mit den Schritten:

a) Beaufschlagen des Gehäuses mit Druck unter Verwendung eines Fluids, das mit einer speziellen Fluiddurchflussrate von einem Fluideinleitungsort zu und durch Lecks in dem Fluidgehäuse strömt und eine spezielle Druckdifferenz über den Lecks vorsieht;
b) Überwachen der Fluidströmung und des Drucks innerhalb des Fluidgehäuses;
c) Einleiten eines Aerosols mit Teilchen in einem Größenbereich zwischen 1 und 100 Mikrometer im Durchmesser in das Fluidgehäuse; und
d) Einführen der Teilchen in das zu den und durch die Lecks strömende Fluid,

wobei die Teilchen ihre Form im Wesentlichen beibehalten und an der Gehäusewand und aneinander bei einem Zusammenstoß an Stellen benachbart zu den Lecks haften, um eine Brücke von Teilchen aufzubauen, die sich zwischen den Grenzen von jedem der Lecks erstreckt.

2. Verfahren nach Anspruch 1, wobei die Teilchen in einem Größenbereich zwischen 2 und 40 Mikrometer im Durchmesser liegen.

3. Verfahren nach Anspruch 2, wobei die Teilchen in einem Größenbereich zwischen 3 und 15 Mikrometer im Durchmesser liegen.

4. Verfahren nach Anspruch 1, wobei die erzeugte Fluiddurchflussrate zwischen 20 und 20000 Kubikmeter pro Stunde liegt.

5. Verfahren nach Anspruch 4, wobei die erzeugte Fluiddurchflussrate zwischen 100 und 5000 Kubikmeter pro Stunde liegt.

6. Verfahren nach Anspruch 5, wobei die erzeugte Fluiddurchflussrate zwischen 200 und 600 Kubikmeter pro Stunde liegt.

**7.** Verfahren nach Anspruch 1, wobei die Teilchen ein Festphasen-Aerosol sind, wobei Schritt d) die Schritte aufweist:

e) Verdünnen eines in einer Trägerflüssigkeit suspendierten Dichtungsmittels;
f) Einleiten des in der Trägerflüssigkeit suspendierten Dichtungsmittels in die Fluidströmung, und
g) Verringern des Sättigungsgrades der Dampfphase der Trägerflüssigkeit in der Fluidströmung.

**8.** Verfahren nach Anspruch 7, wobei Schritt g) den Schritt aufweist:

h) Trocknen des Gases in der Fluidströmung.

**9.** Verfahren nach Anspruch 7, wobei Schritt g) den Schritt aufweist:

h) Erhitzen des Gases in der Fluidströmung.

**10.** Verfahren nach Anspruch 1, wobei Schritt a) zum Unterstützen der Druckbeaufschlagung des Gehäuses die Schritte aufweist:

e) Schließen von irgendwelchen absichtlichen Öffnungen im Gehäuse; und
f) Isolieren oder Entfernen von beschichtungsempfindlichen Strukturen aus dem Inneren des Gehäuses.

**11.** Verfahren nach Anspruch 10, wobei Schritt a) zum weiteren Unterstützen der Druckbeaufschlagung des Gehäuses den zusätzlichen Schritt aufweist:

g) Verwenden eines Filters an einer absichtlichen Öffnung des Gehäuses, um den Innendruck zu verringern und die Fluidströmungsgeschwindigkeiten zu erhöhen.

**12.** Verfahren nach Anspruch 10, wobei Schritt a) zum weiteren Unterstützen der Druckbeaufschlagung des Gehäuses den zusätzlichen Schritt aufweist:

g) Induzieren einer Turbulenz im Gehäuse, um zu helfen, Teilchen im Luftstrom suspendiert zu halten.

**13.** Verfahren nach Anspruch 7, wobei das Festphasen-Aerosol in Wasser suspendiert ist.

**14.** Verfahren nach Anspruch 7, wobei das zum Erzeugen der Trägerströmung verwendete Gas Luft ist.

**15.** Vorrichtung zum entfernten Abdichten und Beschichten eines Gehäuses von innen mit:

a) einem primären Körper (2), der aus einer hohlen Struktur besteht, die in ein Vorbereitungsende (4) und ein Abgabeende (6) unterteilt ist,
b) einem Gebläse (8), das mit dem Vorbereitungsende (4) des primären Körpers (2) verbunden ist,
c) einem Lufterhitzer (10), der zwischen dem Gebläse und dem Abgabeende des primären Körpers angeordnet ist,
d) einem Filter (12), der zwischen dem Lufterhitzer und dem Abgabeende des primären Körpers angeordnet ist,
e) einem Thermostaten (14), der sich innerhalb des primären Körpers befindet,
f) einem Druckschalter (16), der sich innerhalb des primären Körpers befindet,
g) einem Steuermechanismus (18), der das Gebläse, den Drucksensor, den Lufterhitzer und den Thermostaten verbindet,
h) einer Einleitungsdüse (20), die in den primären Körper zwischen dem Filter und dem Abgabeende des primären Körpers eingesetzt ist, und
i) einer Aerosolquelle (22), die mit der Einleitungsdüse verbunden ist;

wobei die Einleitungsdüse (20) dazu ausgelegt ist, ein Aerosol mit Teilchen in einem Größenbereich zwischen 1 und 100 Mikrometer im Durchmesser einzuleiten.

**16.** Vorrichtung nach Anspruch 15, wobei eine Durchflussmessvorrichtung (19) mit dem Gebläse verbunden ist.

**17.** Vorrichtung nach Anspruch 16, wobei der Druckschalter (16) eine entfernte Einheit ist, die sich innerhalb des abzudichtenden Gehäuses befindet.

**18.** Vorrichtung nach Anspruch 16, wobei die Einleitungsdüse (20) eine Ultraschalldüse ist.

**19.** Vorrichtung nach Anspruch 16, wobei die Aerosolquelle (22) einen Luftkompressor, einen Druckregler und einen Flüssigkeitsspeichertank aufweist.

**20.** Dichtung für eine Lecköffnung in einem Gehäuse mit:

Teilchen, die im Wesentlichen ihre Form beibehalten und an einer Gehäusewand und aneinander an Stellen benachbart zu einer Lecköffnung in der Gehäusewand haften, wobei die Teilchen infolge ihrer Haftung aneinander an Stellen benachbart zu der Lecköffnung eine Brücke von Teilchen bilden, die eine Dichtung herstellt, die sich zwischen den Grenzen des Lecks erstreckt;
wobei die Lecköffnungsdichtung durch ein Verfahren nach Anspruch 1 aufgebracht wird; oder
wobei die Lecköffnungsdichtung unter Verwendung einer Vorrichtung nach Anspruch 15 aufgebracht wird.

**Revendications**

**1.** Procédé destiné à réaliser l'étanchéité vis-à-vis de fuites dans une enceinte pour fluide comprenant les étapes consistant à :

a) mettre en pression l'enceinte en utilisant un fluide s'écoulant à un débit de fluide particulier à partir d'un emplacement d'injection de fluide vers et au travers de fuites dans ladite enceinte pour fluide et en fournissant une pression différentielle particulière au travers des fuites,
b) surveiller l'écoulement de fluide et la pression à l'intérieur de ladite enceinte pour fluide,
c) injecter dans ladite enceinte pour fluide un aérosol comprenant des particules dans une plage de taille entre 1 et 100 micromètres de diamètre, et
d) introduire lesdites particules dans ledit fluide s'écoulant vers et au travers desdites fuites,

dans lequel lesdites particules conservent globalement leur forme et adhèrent à la paroi de l'enceinte et les unes aux autres au moment de l'impact à des emplacements adjacents aux fuites pour construire un pont de particules pour s'étendre entre les limites de chacune desdites fuites.

**2.** Procédé selon la revendication 1, dans lequel lesdites particules sont dans une plage de taille entre 2 et 40 micromètres de diamètre.

**3.** Procédé selon la revendication 2, dans lequel lesdites particules sont dans une plage de taille entre 3 et 15 micromètres de diamètre.

**4.** Procédé selon la revendication 1, dans lequel le débit de fluide généré se situe entre 20 et 20 000 mètres cubes par heure.

**5.** Procédé selon la revendication 4, dans lequel le débit de fluide généré se situe entre 100 et 5 000 mètres cubes par heure.

**6.** Procédé selon la revendication 5, dans lequel le débit de fluide généré se situe entre 200 et 600 mètres cubes par heure.

**7.** Procédé selon la revendication 1, dans lequel les particules sont un aérosol à phase solide, l'étape d) comprenant les étapes consistant à :

e) diluer un agent d'étanchéité mis en suspension dans un liquide de support,
f) injecter l'agent d'étanchéité mis en suspension dans le liquide de support dans l'écoulement de fluide, et
g) réduire le degré de saturation de la phase vapeur du liquide de support dans l'écoulement de fluide.

**8.** Procédé selon la revendication 7, dans lequel l'étape g) comprend l'étape consistant à :

h) sécher le gaz dans ledit écoulement de fluide.

**9.** Procédé selon la revendication 4, dans lequel l'étape g) comprend l'étape consistant à :

h) chauffer le gaz dans ledit écoulement de fluide.

**10.** Procédé selon la revendication 1, dans lequel l'étape a) destinée à contribuer à la mise en pression de l'enceinte, comprend les étapes consistant à :

e) fermer toutes les ouvertures voulues dans l'enceinte, et
f) isoler ou enlever des structures sensibles à un revêtement de l'intérieur de l'enceinte.

**11.** Procédé selon la revendication 10, dans lequel l'étape a), destinée à contribuer en outre à la mise en pression de l'enceinte, comprend l'étape supplémentaire consistant à :

g) utiliser un filtre au niveau d'une ouverture voulue de ladite enceinte pour réduire la pression interne et augmenter les vitesses d'écoulement de fluide.

**12.** Procédé selon la revendication 10, dans lequel l'étape a), destinée à contribuer en outre à la mise en pression de l'enceinte, comprend l'étape supplémentaire consistant à :

g) induire des turbulences dans l'enceinte pour favoriser le maintien des particules à l'état suspendu dans l'écoulement.

**13.** Procédé selon la revendication 7, dans lequel l'aérosol à phase solide est mis en suspension dans de l'eau.

**14.** Procédé selon la revendication 7, dans lequel le gaz utilisé pour générer ledit écoulement de support est l'air.

**15.** Dispositif destiné à réaliser l'étanchéité et à revêtir à distance une enceinte à partir de l'intérieur comprenant :

a) un corps principal (2) qui est constitué d'une structure creuse divisée en une extrémité de préparation (4) et une extrémité de délivrance (6),
b) un ventilateur (8) relié à l'extrémité de préparation (4) du corps principal (2),
c) un dispositif de chauffage d'air (10) disposé entre ledit ventilateur et l'extrémité de délivrance du corps principal,
d) un filtre (12) disposé entre ledit dispositif de chauffage d'air et l'extrémité de délivrance du corps principal,
e) un thermostat (14) situé à l'intérieur du corps principal,
f) un manocontact (16) situé à l'intérieur du corps principal,
g) un mécanisme de commande (18) reliant ledit ventilateur, le capteur de pression, ledit dispositif de chauffage d'air et le thermostat,
h) une buse d'injection (20) positionnée dans le corps principal entre le filtre et l'extrémité de délivrance du corps principal, et
i) une source d'aérosol (22) reliée à ladite buse d'injection,

dans lequel la buse d'injection (20) est conçue pour injecter un aérosol comprenant des particules dans une plage de taille entre 1 et 100 micromètres de diamètre.

**16.** Dispositif selon la revendication 15, dans lequel un dispositif de mesure d'écoulement (19) est relié audit ventilateur.

**17.** Dispositif selon la revendication 16, dans lequel le manostat (16) est une unité à distance située à l'intérieur de l'enceinte devant être rendue étanche.

**18.** Dispositif selon la revendication 16, dans lequel la buse d'injection (20) est une buse à ultrasons.

**19.** Dispositif selon la revendication 16, dans lequel la source d'aérosol (22) comprend un compresseur d'air, un régulateur de pression et un réservoir de stockage de liquide.

**20.** Elément d'étanchéité d'une ouverture de fuite dans une enceinte comprenant :

des particules qui conservent globalement leur forme et adhèrent à une paroi d'enceinte et les unes aux autres à des emplacements adjacents à une ouverture de fuite dans la paroi d'enceinte, où les particules par suite de leur adhérence les unes aux autres à des emplacements adjacents à ladite ouverture de fuite forment un pont de particules établissant un élément d'étanchéité s'étendant entre les limites de ladite fuite,

où ledit élément d'étanchéité d'ouverture de fuite est appliqué par le bais d'un procédé selon la revendication 1, ou où ledit élément d'étanchéité d'ouverture de fuite est appliqué en utilisant un dispositif selon la revendication 15.

EP 0 793 543 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4327132 A
- US 4454173 A
- US 4454174 A
- US 4768561 A
- GB 2195416 A
- US 4994307 A

**Non-patent literature cited in the description**

- **MODERA, M.P.** *Energy and Buildings,* 1993, vol. 20, 65-75
- **ANAND, N.K. ; MC FARLAND, A.R.** *American Industrial Hygiene Association,* vol. 50, 307-312